# EUROPEAN PATENT SPECIFICATION

(11) **EP 0 758 869 B1**
(45) Date of publication and mention of the grant of the patent: **08.07.1998**
(21) Application number: 94920572.8
(22) Date of filing: 14.06.1994
(51) Int. Cl.: A61C 15/00, A61H 13/00, A46B 5/04

(54) **FINGER GLOVE COMPRISING AREAS PREPARED FOR ORAL HYGIENE**
FINGERLING MIT FÜR MUNDHYGIENE VORBEREITETEN FLÄCHEN
GANT POUR UN SEUL DOIGT COMPORTANT DES ZONES PREPAREES POUR L'HYGIENE BUCCALE

(30) Priority: 11.05.1994 IT MI940933
(43) Date of publication of application: 26.02.1997
(73) Proprietor: Mittiga Maria Ida, 00191 Roma (IT)
(72) Inventor: Mittiga Maria Ida, 00191 Roma (IT)
(74) Representative: Filippi, Remo
(86) International application number: PCT/IT94/00085
(87) International publication number: WO 95/31154

(56) References cited:
- DE-A- 3 232 313
- DE-A- 4 207 864
- GB-A- 2 266 243

## Description

The invention concerns appliances and means generally for keeping the teeth clean. An appliance as defined in the preamble of claim 1 is disclosed in DE-A-3 232 313.

Oral hygiene for prevention of disorders of the teeth and surrounding gum tissue, disorders which may even become serious and incurable, is known to be of great importance for general health.

Lack of oral hygiene leads to the spread of harmful germs, among the various species of microbes present in the mucous, producing film and causing diseases, especially tooth decay mainly due to the presence of streptoccus mutans.

The film that forms on the teeth reappears five hours after removal and can turn into brown tartar caused by calcification of the bacteria and other substances it contains which in turn further assist accumulation of film leading to irritation and shrinkage of the gums.

Food, especially when too soft, leaves residual matter between the teeth where germs find a suitable breeding ground. Residual sugar creates an acid damaging for tooth enamel.

To prevent mouth diseases proper oral hygiene is therefore a necessity and is at present attempted by means of a toothbrush on a handle which ought to be used for at least three minutes after each meal.

In this case however the fingers act on the teeth through two agencies: the handle of the toothbrush and the bristles. These agencies clearly impede any real perception during cleaning as reactions by the teeth cannot be felt by the fingers.

As it is difficult if not impossible to see inside the mouth during toothcleaning, present methods of oral hygiene must necessarily be rough and ready and prevent any possibility of a proper check on the results.

By their very nature, bristles are a hotbed of bacteria and of germs that collect among the teeth.

Rinsing the toothbrush under a running tap after use is almost entirely ineffective as the water cannot penetrate between the tufts of bristles and even less among the bristles themselves.

Action by toothbrushes may even be negative if used by the members of a family and exchanged indiscriminately among them.

The idea of a disposable toothbrush to be discarded after use is unthinkable, the structure of an efficient one being complex and there fore too costly.

The prior patent DE-A-3 232 313 discloses a rubber glove and the like for one finger of the hand that comprises an active area with tufts of bristles or with a number of small rubber nodules 2 mm high or with depressions in the rubber 4-5 mm deep placed in closely aligned rows.

The rubber depressions are used especially in dental disorders, for cleaning cervical surfaces and pockets in the gums.

When filled with dentifrice or medicinal paste the depressions are used for circular massage on the edges of such pockets.

Short pumping movements are executed.

This patent particularly requests "patent protection for the conformation and provision of bristles, rubber nodules, rubber depressions in the active area...adaptable to a finger of the hand by ... gloves..."

Clearly, effectiveness of this disclosure for treating teeth and gums, for normal hygiene and medical care, is tied to the limited quantity of dentifrice or medicament, that can reach the teeth from the active area.

By their very nature both the bristles and depressions are in fact of an open concave hemispherical shape and therefore have little chance of retaining the active product that spreads over the surface of the glove at the first rubbing movement and after that on teeth and gums.

The depressions in particular do not seem to give better results than could be obtained by spreading the active product on the glove itself.

Purpose of the invention is greatly to improve effectiveness of the operative areas of a glove applicable to one finger of the hand, providing it with means that ensure a slow and continuous distribution of product on the treated part, adjusting the quantity distributed, according to finger pressure on teeth or gums, as will be explained below. Subject of the invention for more efficient oral hygiene is an appliance as defined in claim 1.

As the operative area is situated on the inside of the finger, this appliance can rub it against the teeth, gums and elsewhere in the oral cavity, assisted by dentifrice and other products for cleaning the teeth, tonifying the gums, massaging and applying beneficial action generally.

Operative areas comprise at least one chamber containing active product, fluid or powder, detergent or medical dentifrice, generally beneficial, the product emerging from said chamber when said operative areas are rubbed against the teeth or gums and spread onto said teeth or gums.

One product could with advantage contain fluorine to keep the teeth in good condition, and could also remove film.

The products could be applied dry or in liquid form, with or without water.

The operational area can be shaped like a longitudinal strip while others may be variously shaped, polygonal or discoid.

In one execution the operational areas are sealed cells containing an active product, the cell walls on the outside surface of the finger glove being very thin or so made as to break open during massage of the teeth and gums.

Said areas may be the same or be different, associated or single, laid side by side or otherwise placed.

The active product is dentifrice, detergent or some beneficial substance; it may be fluid, in powder form or else soluble in water.

In one execution the operational area is a flat sealed chamber containing a fluid product whose walls, on the outer surface of the finger glove, contain minute perforations or pores.

When the teeth or gums are rubbed with it, the fluid product there fore seeps out through said holes or pores, the fluid product concerned being a dentifrice, detergent or of a medicinally beneficial kind.

The finger glove is preferably supplied packed inside a sealed waterproof sachet.

The sachet contains a detergent, health-giving, refreshing product beneficial generally for the oral cavity.

Both the finger glove and inside of the sachet are sterile.

A thread of dental floss may be attached to the glove.

At the closed rounded end of the finger glove there may be a soft pointed cone-shaped projection specially useful for cleaning the teeth.

Said projection may be axial, directed laterally or diagonally as preferred.

The invented finger glove may be made in different sizes to fit the finger of the hand of a man, woman or child and, at the open end, there is a thickened border to assist in putting it on and taking it off.

The invention clearly offers many advantages.

Cleaning teeth is done with a sensitive means, with real perception of the part under the finger tip, of pressure applied and of the effects obtained since it is the finger itself which is in practically direct contact with the teeth with all the tactile characteristics it possesses.

The same is true of all action on teeth, gums and other parts of the oral cavity during application of beneficial or relief-giving products such as pain killers and others.

Maximum hygiene is assured since the appliance can be disposed of after use on account of its very low cost.

The advantages of the invention may be summed up as permitting highly effective, safe and sensitive care of the oral cavity both in cleaning the teeth and in application or medicinal substances.

Characteristics and purposes of the invention will be made still clearer by the following examples of its execution illustrated by diagrammatically drawn figures.

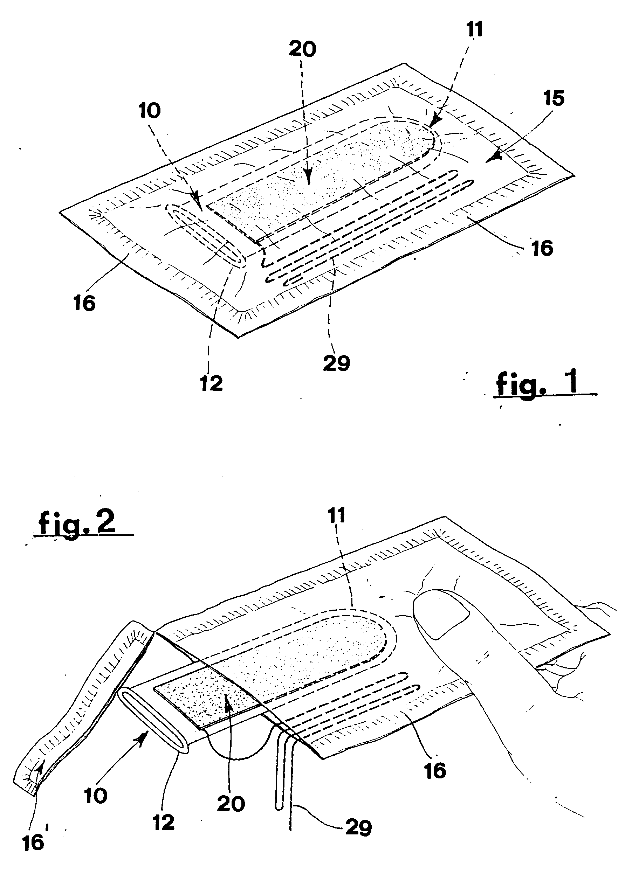

- Fig. 1: Front view of the invented finger glove protected by a sealed waterproof packet.
- Fig. 2: Perspective view of the glove outside the packet.

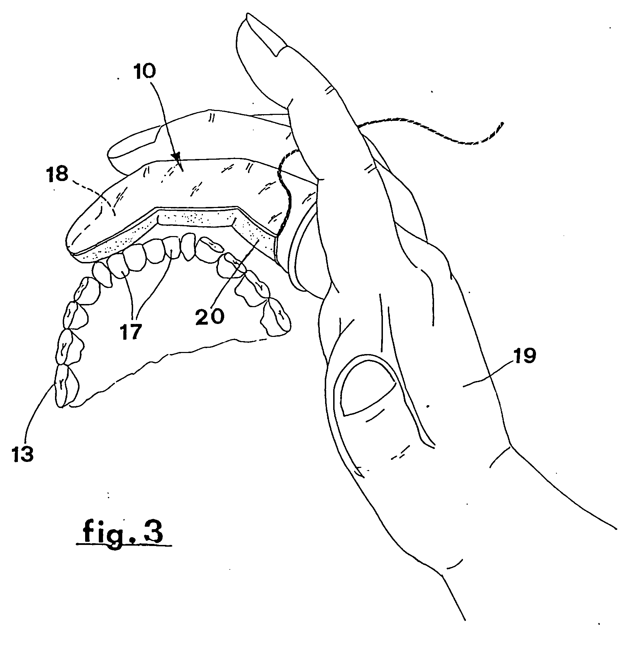

- Fig. 3: Perspective view of the glove worn on the middle finger of a user while cleaning the teeth.
- Fig. 4: Perspective view of the glove on which are closed cells filled with an active fluid.
- Fig. 5: Perspective view of the glove on which is a flat oblong chamber filled with active fluid and having minute perforations on the external surface.
- Fig: 6: Perspective view of the glove with a circular active area.
- Fig. 7: Perspective view of the glove with two active strips of a different type, one alongside the other.
- Figs. 8-10: Perspective view of the glove with soft tapering tips respectively in an axial, lateral and oblique direction.

The glove 10 of a substantially cylindrical shape for the finger of a hand is made of fine flexible rubber and has a rounded tip 11 and a thickened edge 12 at the open end.

Fixed onto said glove is an active longitudinal strip 20 extending from the tip to a short distance from the base.

Its width is substantially half the glove's circumference.

The size of the glove is substantially that of the middle finger of an adult person.

Said glove is protected by a packet 15 of waterproof material sealed all round its edges 16.

To use the glove, one end 16' is torn off the packet, the glove is taken out and fitted onto the middle finger 18 of the hand 19 so that the active strip 20 lies on the inner side of the finger 18.

This greater effectiveness is assured by use of the finger to reach all parts of the mouth and of the teeth 17 with maximum sensitivity and therefore with an action that is both thorough and gentle.

The cylindrical surface of the finger glove 80 carries a series of closed cells 81 containing an active fluid 82 for the teeth. When the glove is rubbed against the teeth, the cells break open and spread the fluid all over the teeth or on the gums as well, and therefore do the work of an ordinary toothbrush or other means for treating the oral cavity.

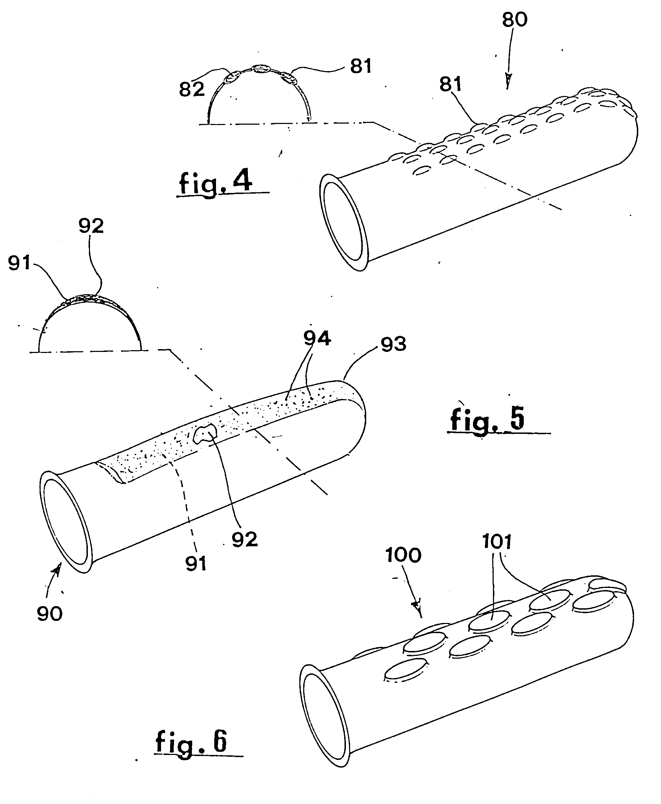

On the finger glove 90 (Fig. 5) is a closed oblong chamber 91 full of fluid 92. Its surface 93 is perforated with minute holes 94. Therefore, unless pressure is exerted on the chamber the fluid remains inside it. But when the chamber is rubbed against the teeth, internal pressure causes the fluid to seep out through the holes onto the teeth or onto other parts of the mouth.

In Fig. 6 the finger glove 100 has, instead of the active rectangular strips, active circular raised areas 101 placed substantially like one or other of the gloves already described except that the shape is different.

The circular shape can of course be replaced by others that may be oval, polygonal generally but whose effect is similar to the others.

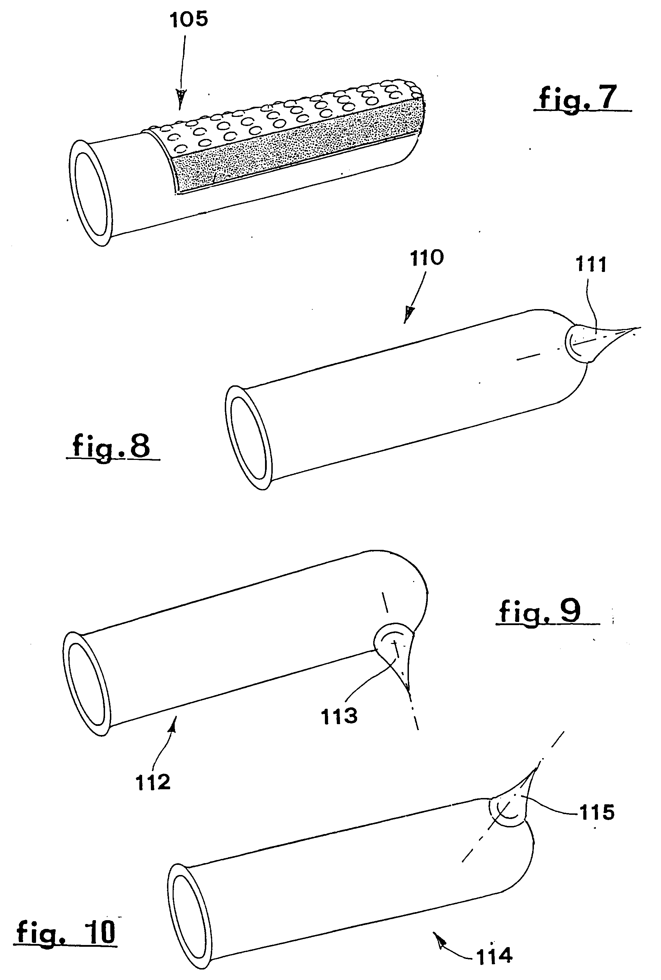

The finger glove 105 (Fig. 7) has two rectangular longitudinal operational strips placed side by side.

Associations among all the operational areas already described or of other types are obviously possible.

Figures 8-10 show finger gloves 110, 112, 114 provided with soft tapering projections 111, 113, 115, respectively placed axially, laterally or obliquely, for the well known action of this kind of device in the oral cavity.

These projections can be added to all the finger gloves already described.

The finger glove 10 also has a thread of dental floss 29 attached to it, this being highly useful for removing film between the teeth.

## Claims

1. Appliance for hygiene and care of the oral cavity consisting of a thin natural or synthetic rubber glove (80, 90) for one finger (18) of a hand (19) with one or more operative surface areas placed longitudinally right up to the end, therefore corresponding in particular to the position of the fingertip, so as to permit said area to make contact with, and rub, the teeth (17), gums and other parts of the oral cavity, characterized in that the operative areas comprise at least one chamber (81,91) containing an active product (82, 92) fluid or in powder form, dentifrice, detergent or health-giving and generally beneficial which, when said operative areas are rubbed against the teeth or gums, emerges from said chamber and is spread over said theeth and gums.

2. Appliance for hygiene and care of the oral cavity as in claim 1,
characterized in that the active product (82) is contained in sealed cells (81) in the operative areas, whose surfaces, on the external surface of the glove (80), are of a thickness and make such as to cause them to break during rubbing of the teeth and gums.

3. Appliance for hygiene and care of the oral cavity as in claim 1,
characterized in that the active product (92) is contained in a flat sealed chamber (91) whose surface, corresponding to the external surface (93) of the glove (90), contains minute holes or pores (94) through which the product seeps during rubbing of the teeth and gums.

4. Appliance for hygiene and care of the oral cavity as in claim 1,
characterized in that the operative area is a longitudinal strip.

5. Appliance for hygiene and care of the oral cavity as in claim 1,
characterized in that the operative area is polygonal or discoid in shape.

6. Appliance for hygiene and care of the oral cavity as in claim 1,
characterized in that the glove (80, 90) is enclosed within a sealed waterproof packet (15).

7. Appliance for hygiene and care of the oral cavity as in claim 1,
characterized in that inside the packet (15) containing the glove (80,90) is a detergent, health-giving, refreshing product, generally beneficial to the oral cavity.

8. Appliance for hygiene and care of the oral cavity as in claim 1,
characterized in that both the inside of the packet (15) and also the glove (80, 90) are sterile.

9. Appliance for hygiene and care of the oral cavity as in claim 1,
characterized in that attached to the glove (80, 90) is a thread (29) known as dental floss.

10. Appliance for hygiene and care of the oral cavity as in claim 1,
characterized in that the size of the glove (80, 90) can vary to suit the finger of a man, a woman or a child user.

11. Appliance for hygiene and care of the oral cavity as in claim1,
characterized in that the active product (82, 92) is of the type known as anti-film.

12. Appliance for hygiene and care of the oral cavity as in claim 1,
characterized in that the active product (82, 92) contains fluorine.

13. Appliance for hygiene and care of the oral cavity as in claim 1,
characterized in that at the closed rounded end (11) of the glove (80, 90) is a soft pointed tapered projection (111,113, 115) to facilitate mechanical action in the oral cavity.

14. Appliance for hygiene and care of the oral cavity as in claim 14,
characterized in that the tapered projection is placed axially (111), laterally (113) or obliquely (115) as the case may be.

## Patentansprüche

1. Gebrauchsgegenstand für die Hygiene und Behandlung des Mundraums, bestehend aus einem dünnen Überzieher 80, 90) aus Natur- oder Kunstgummi für einen Finger (18) der Hand (19) mit einer oder mehreren speziell konzipierten Kontaktbereichen, welche längs des Überziehers bis zur Spitze hin verlaufen und somit eine spezielle Arbeitsfläche für den Finger darstellen, die für den Kontakt und die Reibung zwischen dieser Arbeitsfläche und den Zähnen (17), dem Zahnfleisch oder anderen Bereichen der Mundhöhle konzipiert wurden;
gekennzeichnet dadurch, daß zum besagten Kontaktbereich wenigstens eine Kammer (81, 91) gehört, welche einen flüssigen oder auch pulverförmigen Wirkstoff (82, 92), eine Zahnpasta oder ein anderes Mittel zur Hygienebehandlung enthält, welches durch den Reibekontakt dieser Arbeitsfläche mit den Zähnen oder dem Zahnfleisch aus der besagten Kammer austritt und auf die Zähnen bzw. auf das Zahnfleisch aufgetragen wird.

2. Gebrauchsgegenstand für die Hygiene und Behandlung des Mundraums, wie unter Inanspruchnahme 1) beschrieben, gekennzeichnet dadurch, daß sich der Wirkstoff (82) in dichten Zellen (81) der Arbeitsfläche befindet, deren Wand der Außenfläche des Überziehers (80) entspricht, wobei die Wandstärke und die Verarbeitung dieser Zellen derart ist, daß sie durch die Reibung auf den Zähnen bzw. auf dem Zahnfleisch brechen.

3. Gebrauchsgegenstand für die Hygiene und Behandlung des Mundraums, wie unter Inanspruchnahme 1) beschrieben, gekennzeichnet dadurch, daß sich der Wirkstoff (92) in einer flachen, dichten Kammer (91) der Arbeitsfläche befindet, deren Wand der Außenfläche (93) des Überziehers (90) entspricht und mit feinen Löchern bzw. Poren (94) ausgestattet ist, welche durch die Reibung auf den Zähnen bzw. auf dem Zahnfleisch den Austritt des besagten Wirkstoffes bewirken.

4. Gebrauchsgegenstand für die Hygiene und Behandlung des Mundraums, wie unter Inanspruchnahme 1) beschrieben, gekennzeichnet dadurch, daß die Arbeitsfläche ein länglicher Streifen ist.

5. Gebrauchsgegenstand für die Hygiene und Behandlung des Mundraums, wie unter Inanspruchnahme 1) beschrieben, gekennzeichnet dadurch, daß die Arbeitsfläche eine polygonale oder scheibenförmige Form hat.

6. Gebrauchsgegenstand für die Hygiene und Behandlung des Mundraums, wie unter Inanspruchnahme 1) beschrieben, gekennzeichnet dadurch, daß der Überzieher (80, 90) in einer undurchlässigen, dichten Hülle (15) untergebracht ist.

7. Gebrauchsgegenstand für die Hygiene und Behandlung des Mundraums, wie unter Inanspruchnahme 7) beschrieben, gekennzeichnet dadurch, daß sich in der Hülle (15), in welcher der Überzieher (80, 90) untergebracht ist, ein reinigender, erfrischender, lindernder Wirkstoff zur allgemeinen Behandlung des Mundraums befindet.

8. Gebrauchsgegenstand für die Hygiene und Behandlung des Mundraums, wie unter Inanspruchnahme 7) beschrieben, gekennzeichnet dadurch, daß der Innenbereich der besagten Hülle (15) sowie der Überzieher (80, 90) steril sind.

9. Gebrauchsgegenstand für die Hygiene und Behandlung des Mundraums, wie unter Inanspruchnahme 1) beschrieben, gekennzeichnet dadurch, daß der Überzieher (80, 90) an einen Faden (29) zur Reinigung der Zahnzwischenräume angeschlossen ist.

10. Gebrauchsgegenstand für die Hygiene und Behandlung des Mundraums, wie unter Inanspruchnahme 1) beschrieben, gekennzeichnet dadurch, daß der Überzieher (80, 90) in verschiedenen Größen gehalten ist, welche je nach dem vorgesehenen Einsatz der Hand eines Mannes, einer Frau oder eines Kindes angepaßt sind.

11. Gebrauchsgegenstand für die Hygiene und Behandlung des Mundraums, wie unter Inanspruchnahme 1) beschrieben, gekennzeichnet dadurch, daß der Wirkstoff (82, 92) ein Mittel gegen Zahnbelag ist.

12. Gebrauchsgegenstand für die Hygiene und Behandlung des Mundraums, wie unter Inanspruchnahme 1) beschrieben, gekennzeichnet dadurch, daß der Wirkstoff (82, 92) Fluor enthält.

13. Gebrauchsgegenstand für die Hygiene und Behandlung des Mundraums, wie unter Inanspruchnahme 1) beschrieben, gekennzeichnet dadurch, daß der Überzieher (80, 90) in Höhe der geschlossenen, gewölbten Außenfläche (11) mit einem konischen, weichen, spitz zulaufenden Schutzbereich (111, 113, 115) ausgestattet ist, welcher die mechanischen Handlungen in der Mundhöhle vereinfachen soll.

14. Gebrauchsgegenstand für die Hygiene und Behandlung des Mundraums, wie unter Inanspruchnahme 14) beschrieben, gekennzeichnet dadurch, daß der besagte konische Schutzbereich je nach geplantem Einsatz länglich (113) oder querverlaufend (115) sein kann.
(Siehe Abb. 1-2-3-4-5-6-7-8-9-10)

## Revendications

1. Instrument pour l'hygiène et le soin de la cavité buccale formé d'un doigtier (80, 90) en caoutchouc naturel ou synthétique, fin, pour un doigt (18) de la main (19) comportant une ou plusieurs zones opératoires superficielles, disposées dans le sens de la longueur jusqu'à la pointe et donc de façon à correspondre à la pulpe et à permettre le contact et le frottement desdites zones sur les dents (17), les gencives et les autres parties de la bouche,
caractérisé par le fait que les zones opératoires comprennent au moins une chambre (81, 91) contenant un produit (82, 92) actif, liquide ou en poudre, dentifrice détergent ou curatif, généralement bénéfique qui, par suite du frottement de ces zones opératoires sur les dents et les gencives, sort de ladite chambre et se répand sur les parties frottées.

2. Instrument pour l'hygiène et le soin de la cavité buccale conformément à la revendication 1), caractérisé par le fait que le produit actif (82) est contenu dans des cellules étanches (81) des zones opératoires et que la paroi desdites cellules qui correspond à la surface extérieure du doigtier (80) est très fine et conçue de telle manière que le frottement sur les dents et les gencives la déchire.

3. Instrument pour l'hygiène et le soin de la cavité buccale conforme à la revendication 1), caractérisé par le fait que le produit actif (92) est contenu dans une chambre (91) plate, étanche, dont la paroi correspondant à la surface (93) extérieure du doigtier (90) est munie de trous minuscules ou pores (94) aptes à permettre au produit de sortir à la suite du frottement sur les dents et les gencives.

4. Instrument pour l'hygiène et le soin de la cavité buccale conformément à la revendication 1), caractérisé par le fait que la zone opératoire est une bande longitudinale.

5. Instrument pour l'hygiène et le soin de la cavité buccale conformément à la revendication 1) caractérisé par le fait que la zone opératoire a une forme polygonale ou discoïdale.

6. Instrument pour l'hygiène et le soin de la cavité buccale conformément à la revendication 1), caractérisé par le fait que le doigtier (80, 90) est présenté à l'intérieur d'un sachet (15) imperméable et étanche.

7. Instrument pour l'hygiène et le soin de la cavité buccale conformément à la revendication 7), caractérisé par le fait qu'à l'intérieur du sachet (15) qui contient le doigtier (89, 90) se trouve un produit détergent, curatif, rafraîchissant et en général bénéfique pour la cavité buccale.

8. Instrument pour l'hygiène et le soin de la cavité buccale conformément à la revendication 7), caractérisé par le fait que l'intérieur du sachet (15) et le doigtier (80, 90) sont stériles.

9. Instrument pour l'hygiène et le soin de la cavité buccale conformément à la revendication 1), caractérisé par le fait qu'un fil (29) dit interdental est relié au doigtier (80, 90).

10. Instrument pour l'hygiène et le soin de la cavité buccale conformément à la revendication 1), caractérisé par le fait que le doigtier (80, 90) présente des dimensions différentes suivant qu'il est destiné au doigt d'une main d'homme, de femme ou d'enfant.

11. Instrument pour l'hygiène et le soin de la cavité buccale conformément à la revendication 1), caractérisé par le fait que le produit (82, 92) actif est du type dit antiplaque.

12. Instrument pour l'hygiène et le soin de la cavité buccale conformément à la revendication 1), caractérisé par le fait que le produit actif (82, 92) contient du fluor.

13. Instrument pour l'hygiène et le soin de la cavité buccale conformément à la revendication 1), caractérisé par le fait que le doigtier (80, 90) présente, près de son extrémité (11) fermée, bombée, une projection conique (111, 113, 115) souple et pointue pour favoriser les actions mécaniques dans la cavité buccale.

14. Instrument pour l'hygiène et le soin de la cavité buccale conformément à la revendication 13), caractérisé par le fait que la projection conique est, suivant les cas, axiale (111), latérale (113) ou oblique (115).
(Fig. 1-2-3-4-5-6-7-8-9-10)
